# EUROPEAN PATENT SPECIFICATION

(11) **EP 2 031 282 B1**
(45) Date of publication and mention of the grant of the patent: **10.11.2010**
(21) Application number: 08252925.6
(22) Date of filing: 03.09.2008
(51) Int. Cl.: F16H 61/662

(54) **Continuously variable transmission control device, continuously variable transmission, and vehicle equipped with the same**
Stufenlose Antriebsteuervorrichtung, stufenloses Triebwerk und Fahrzeug damit
Dispositif de commande de transmission variable continue, transmission variable continue et véhicule équipé de ceux-ci

(30) Priority: 03.09.2007 JP 2007227787; 27.11.2007 JP 2007305326
(43) Date of publication of application: 04.03.2009
(73) Proprietor: Yamaha Hatsudoki Kabushiki Kaisha, Iwata-shi, Shizuoka 438-8501 (JP)
(72) Inventor: Unno, Toshio, Iwata-shi Shizuoka-ken 438-8501 (JP)
(74) Representative: Lamb, Martin John Carstairs

(56) References cited:
- EP-A- 1 400 728
- EP-A- 1 612 456
- JP-A- 6 249 328

## Description

### FIELD OF THE INVENTION

The present invention relates to a continuously variable transmission control device, a continuously variable transmission, and a vehicle equipped with the same.

### BACKGROUND OF THE INVENTION

In known art, an electronically controlled continuously variable transmission that can continuously vary the transmission ratio (hereinafter, referred to as "ECVT" (electronically controlled continuously variable transmission)) is used in scooter motorcycles, so-called four wheel buggies, and the like.

Normally, an ECVT includes a primary sheave that rotates with an input shaft, a secondary sheave that rotates with an output shaft, a belt that is wound around both the primary sheave and the secondary sheave, and an actuator that varies the belt groove width of the primary sheave. Furthermore, the above-mentioned vehicle includes a control device that controls the ECVT actuator. The control device controls the actuator and changes the transmission ratio based on a driving state of the vehicle such as vehicle speed, engine speed, throttle opening degree, etc., and also based on a transmission ratio map which shows the relationship with the transmission ratio. Accordingly, in vehicles with an ECVT installed (hereinafter, referred to as "ECVT-equipped vehicle") it is not necessary for the rider to change gears or operate a clutch.

Specifically, the primary sheave normally has a moveable sheave that can slide in the axial direction of the input shaft, and a fixed sheave that is fixed in the axial direction of the input shaft. The actuator is connected to the moveable sheave of the primary sheave. The moveable sheave of the primary sheave is driven by the actuator and slides in the axial direction of the input shaft. This varies the width of the belt groove on the primary sheave.

Furthermore, the secondary sheave has a moveable sheave that can slide in the axial direction of the output shaft, and a fixed sheave that is fixed in the axial direction of the output shaft. A spring that urges the moveable sheave to the fixed sheave side is connected to the moveable sheave of the secondary sheave. The moveable sheave of the secondary sheave is constantly urged toward the fixed sheave side by the spring. For this reason, a load in the direction that narrows the width of the belt groove (in the direction that widens a winding radius of the belt) is constantly applied to the secondary sheave. Thus, the primary sheave constantly receives a load in the direction that widens the belt groove width (in the direction that narrows the winding radius of the belt) from the secondary sheave side.

With this type of structure, when the moveable sheave of the primary sheave slides in the direction of the fixed sheave, the belt groove width of the primary sheave is narrowed, and the winding radius of the belt is enlarged. Accompanying this action, along with the belt in the secondary sheave belt groove moving radially inwards, the moveable sheave of the secondary sheave moves in the direction away from the fixed sheave in resistance to the urging force of the spring. In this way, the transmission ratio becomes smaller, and the moveable sheave moves closer to a so-called Top position at which the transmission ratio is at a minimum.

On the other hand, if the moveable sheave of the primary sheave slides in the direction away from the fixed sheave, the belt groove width of the primary sheave widens, and the winding radius of the belt is reduced. Accompanying this action, along with the belt in the secondary sheave belt groove moving to the outside in the radial direction of the secondary sheave, the moveable sheave of the secondary sheave moves towards the fixed sheave by the urging force of the spring. In this way, the transmission ratio becomes larger, and the moveable sheave moves closer to a so-called Low position at which the transmission ratio is at a maximum.

Meanwhile, normally the control device controls the actuator such that the moveable sheave of the primary sheave returns to the Low position at which the belt groove width is at its widest and the transmission ratio is at the maximum when the vehicle is stopped (including idling). Moreover, the control device controls the actuator so that moveable sheave of the primary sheave definitely returns to the Low position when the power is on.

However, for example, when the power is turned off just after driving is stopped through sudden braking, the actuator sometimes stops without having fully returned the primary sheave to the Low position. Moreover, if the power is turned on again in this state, the moveable sheave of the primary sheave will move by itself to the low position while the belt does not rotate. In other words, despite the belt not rotating, the belt groove width on the primary sheave side widens. Thus, the belt may come out of contact with the primary sheave.

However, if the belt is not in contact with the primary sheave, the primary sheave will idly rotate without the belt and no force will be transmitted to the belt. Furthermore, if a sheave position control for sliding the moveable sheave of the primary sheave in order to vary the transmission ratio starts in this state, the non-moving belt will be sandwiched by the primary sheave whose rotation speed has been increased to some degree, and this will cause force to be suddenly transmitted to the belt. For this reason, uneven acceleration and poor riding comfort are issues.

Therefore, it has been proposed that, when the groove width of the primary sheave during starting of the engine is narrower than a stipulated groove width that is set in advance, transmission ratio control (stated otherwise, sheave position control) is not initiated or activated until the engine speed exceeds a stipulated transmission change permissible speed and the transmission ratio control is only initiated or activated once the engine speed has exceeded the transmission change permissible speed (for example, see Japanese Patent No. 3375362).

With the ECVT control device described in Japanese Patent No. 3375362, it is presumed that the belt is rotating together with the primary sheave when the engine speed exceeds the transmission change permissible speed. In reality, however, it cannot be determined with certainty that the primary sheave is not idly rotating without the belt. In other words, if the primary sheave is rotating without the belt, it cannot be determined with certainty from the engine speed that the belt is rotating. For this reason, with the above-described control device, even if the primary sheave is idly rotating without the belt in reality, sheave position control may inadvertently start because the engine speed has exceeded the transmission change permissible speed. Accordingly, with the ECVT control device described in Japanese Patent No. 3375362, whether the primary sheave is rotating with the belt or not cannot be detected with certainty. As a result, it is ultimately difficult to solve the issue of being unable to achieve smooth acceleration when the primary sheave is idly rotating without the belt.

The invention has been devised in light of these circumstances, and is an object of an embodiment thereof to inhibit the reduction in driving comfort caused by a primary sheave idly rotating without a belt during acceleration with a continuously variable transmission that uses an actuator to control a transmission ratio.

### SUMMARY OF THE INVENTION

Various aspects of the present invention are defined in the independent claims. Some preferred features are defined in the dependent claims.

A control device is described herein that is intended for use with an electronically-controlled continuously variable transmission, positioned between a drive source and a driving wheel of a vehicle, that can continuously vary a transmission ratio. The continuously variable transmission may include an input shaft, an output shaft, a primary sheave that includes a primary fixed sheave body that rotates together with the input shaft and a primary moveable sheave body. The primary moveable sheave body faces the primary fixed sheave body and can change position with respect to the primary fixed sheave body in the axial direction of the input shaft. The primary moveable sheave body and the primary fixed sheave body together form a primary-side belt groove that extends and widens in the radial direction, and the primary moveable sheave body rotates together with the input shaft. The continuously variable transmission also includes a secondary sheave that includes a secondary fixed sheave body that rotates together with the output shaft and a secondary moveable sheave body that faces the secondary fixed sheave body. The secondary moveable sheave body can change position with respect to the secondary fixed sheave body in the axial direction of the output shaft, and together with the secondary fixed sheave body forms a secondary-side belt groove that extends and widens in the radial direction. The secondary moveable sheave body rotates together with the output shaft. The continuously variable transmission also includes a belt wound in the primary-side belt groove and the secondary-side belt groove, an actuator that varies a transmission ratio between the primary sheave and secondary sheave by varying at least one of a width of the primary-side belt groove and a width of the secondary-side belt groove, a belt rotation detection sensor that detects rotation of the belt directly or indirectly, and a control portion that controls activation of the actuator. After starting the engine of the vehicle, the control portion only activates the actuator once rotation of the belt is detected.

According to the above-described control device, after starting, activation of the actuator that varies the transmission ratio takes place only after rotation of the belt is detected. Thus, while the primary sheave is rotating idly in relation to the belt, the actuator control remains inactive. Thus, it is possible to inhibit inappropriate interaction between the primary sheave and the belt during acceleration due to activation of the actuator control to vary the transmission ratio when the primary sheave is rotating idly without corresponding rotation of the belt.

Described herein is a continuously variable transmission that uses an actuator to control the transmission ratio can inhibit reduction of driving comfort due to idle rotation of a primary sheave with respect to a belt during acceleration.

### BRIEF DESCRIPTION OF THE DRAWINGS

This and other aspects of the invention will now be described, by way of example, with reference to the accompanying drawings, in which :
FIG. 1 is a side view of a motorcycle that utilizes the invention.
FIG. 2 shows an outline on the configuration of a handle part.
FIG. 3 is a block diagram of a control device.
FIG. 4 is a diagram showing a transmission when the transmission ratio is at Top.
FIG. 5 is a diagram showing the transmission when the transmission ratio is at Low.
FIG. 6 is a flow chart showing the flow of a starting control.
FIG. 7 is a flow chart showing the flow of a starting control of a first modified example.
FIG. 8 is a flow chart showing the flow of a starting control of a second modified example.
FIG. 9 is a diagram showing a belt rotation detection sensor of a third modified example.
FIG. 10 is a diagram showing a belt rotation detection sensor of a fourth modified example.
FIG. 11 is a block diagram of a continuously variable transmission and a control device according to a second embodiment.

### DETAILED DESCRIPTION OF THE DRAWINGS

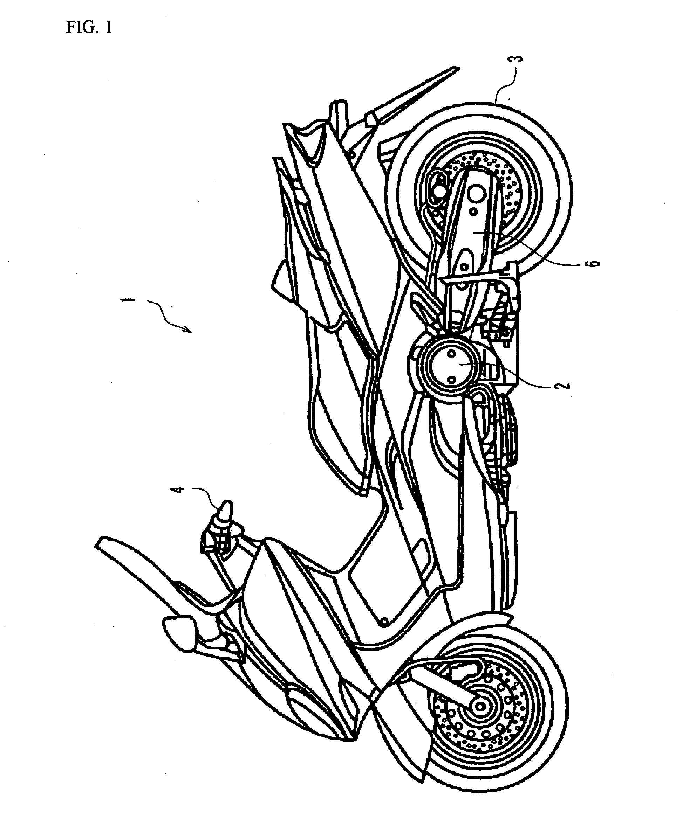

In this embodiment, a scooter motorcycle 1 will be described as one example of an embodiment of the invention. As shown in FIG. 1, the motorcycle 1 includes a handle 4, a power unit 2, and a rear wheel 3 as a driving wheel. The power unit 2 and rear wheel 3 are connected by a force transmission mechanism 6.

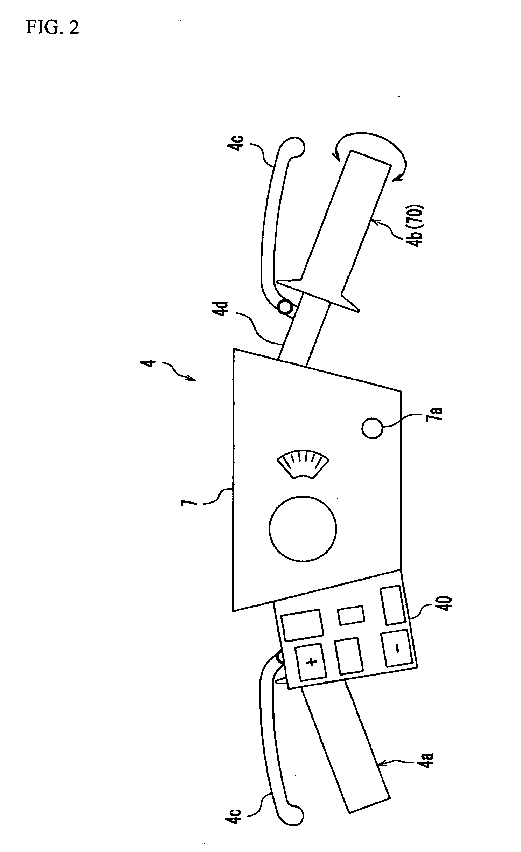

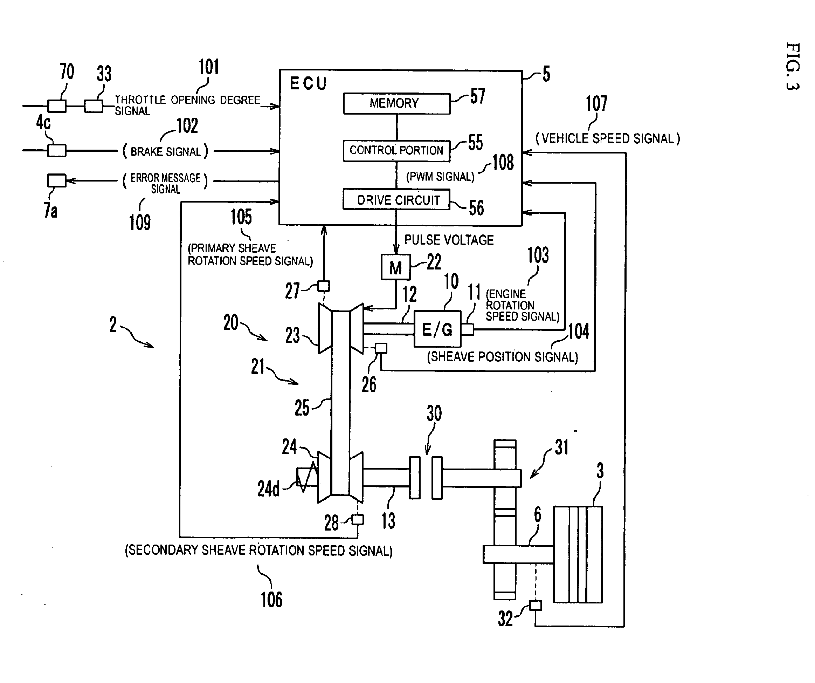

FIG. 2 shows an overview of the structure of the handle 4. The handle 4 includes a handle bar 4d which is connected to the steering head pipe (not shown). The handle 4 includes a left grip section 4a that is positioned on the left end of the handle bar 4d, and a right grip section 4b that is positioned on the right end of the handle bar 4d. The right grip section 4b can be rotated on the handle bar 4d. If the rider rotates the right grip section 4b, a throttle 70 shown in FIG. 3 is operated and a throttle opening degree is adjusted.

Brake levers 4c are positioned near each of the grip sections 4a, 4b. When the brake (not shown in the figures) of the motorcycle 1 is operated by the rider operating these brake levers 4c, a brake signal 102 is output by an ECU 5, as described later.

A switch box 40 is positioned on the right side of the left grip section 4a. Various switches are provided on the switch box 40.

Additionally, there is a display panel 7 that displays vehicle speed, remaining fuel, etc. in the center section of the handle 4.

As shown in FIG. 3, the power unit 2 includes an engine 10 as a drive source, an electronically controlled transmission 20, a centrifugal clutch 30, and a speed reduction mechanism 31. The transmission 20 includes a continuously variable gear change mechanism 21, and a motor 22 that acts as an actuator that varies the transmission ratio of the gear change mechanism 21.

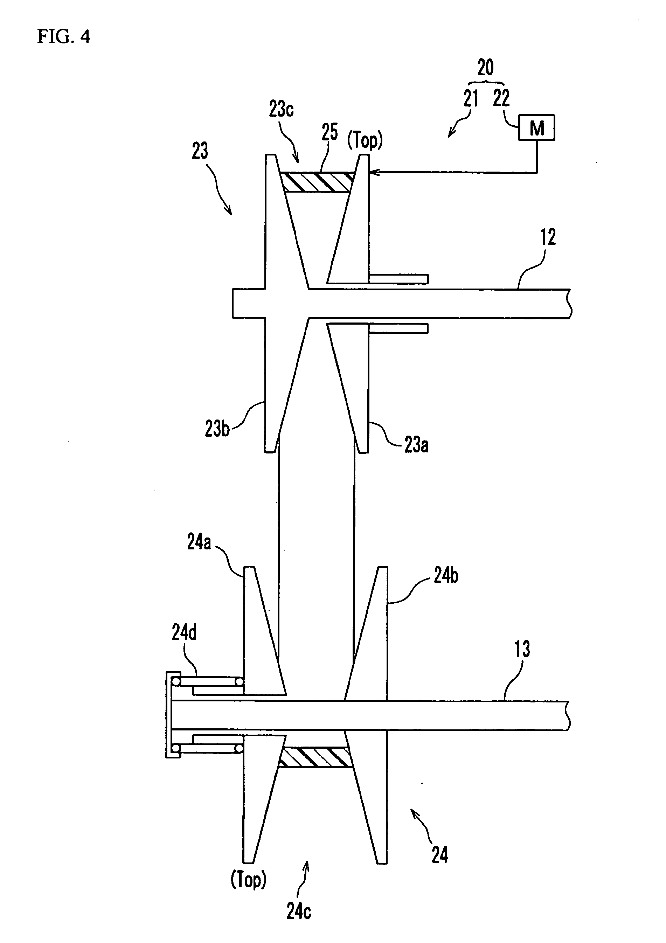

The gear change mechanism 21 is structured so that the transmission ratio can be continuously varied. Specifically, as shown in FIG. 4, the gear change mechanism 21 includes an input shaft 12, an output shaft 13, a primary sheave 23, and a secondary sheave 24. A belt 25 with a generally V-shaped cross section is wound around the primary sheave 23 and the secondary sheave 24. In this embodiment, the belt 25 is made of rubber.

As shown in FIG. 4, the primary sheave 23 includes a moveable sheave 23a and a fixed sheave 23b. The moveable sheave 23a can slide in the axial direction along the input shaft 12. On the other hand, the fixed sheave 23b cannot slide in the axial direction along the input shaft 12. Note that the moveable sheave 23a and the fixed sheave 23b are attached such that they rotate together with the input shaft 12 but cannot rotate relative to the input shaft 12. Additionally, a belt groove 23c that extends and widens in the radial direction outside is formed by the moveable sheave 23a and fixed sheave 23b.

The above-described motor 22 is installed on the primary sheave 23. The motor 22 drives the moveable sheave 23a and slides the moveable sheave 23a in the axial direction along the input shaft 12. When the moveable sheave 23a slides, it varies the width of the belt groove 23c of the primary sheave 23. This moves the belt 25 sandwiched by the primary sheave 23 radially inwards or outwards.

Additionally, the secondary sheave 24 includes a moveable sheave 24a and a fixed sheave 24b. The moveable sheave 24a can slide in the axial direction along the output shaft 13. On the other hand, the fixed sheave 24b cannot slide in the axial direction of the output shaft 13. Note that the moveable sheave 24a and the fixed sheave 23b are attached such that they rotate together with the output shaft 13 but cannot rotate relative to the output shaft 13. The moveable sheave 24a is urged in a direction that narrows the width of a belt groove 24c by a spring 24d. The belt groove 24c extends and widens in the radial direction and is formed by the moveable sheave 24a and fixed sheave 24b.

With this type of structure, as shown in FIG. 4, when the motor 22 slides the moveable sheave 23a of the primary sheave 23 towards the fixed sheave 23b, the belt groove 23c of the primary sheave 23 narrows, and the winding radius of the belt 25 at the primary sheave 23 side is enlarged. Accompanying this action, along with the belt 25 in the belt groove 24c of the secondary sheave 24 moving radially inwards, the moveable sheave 24a of the secondary sheave 24 moves away from the fixed sheave 24b against the resistance of the urging force of the spring 24d. Thus, the winding radius of the belt 25 at the secondary sheave 24 side is reduced. In this way, the transmission ratio becomes smaller, and the moveable sheaves 23a, 24a move closer to a so-called Top position at which the transmission ratio is at a minimum.

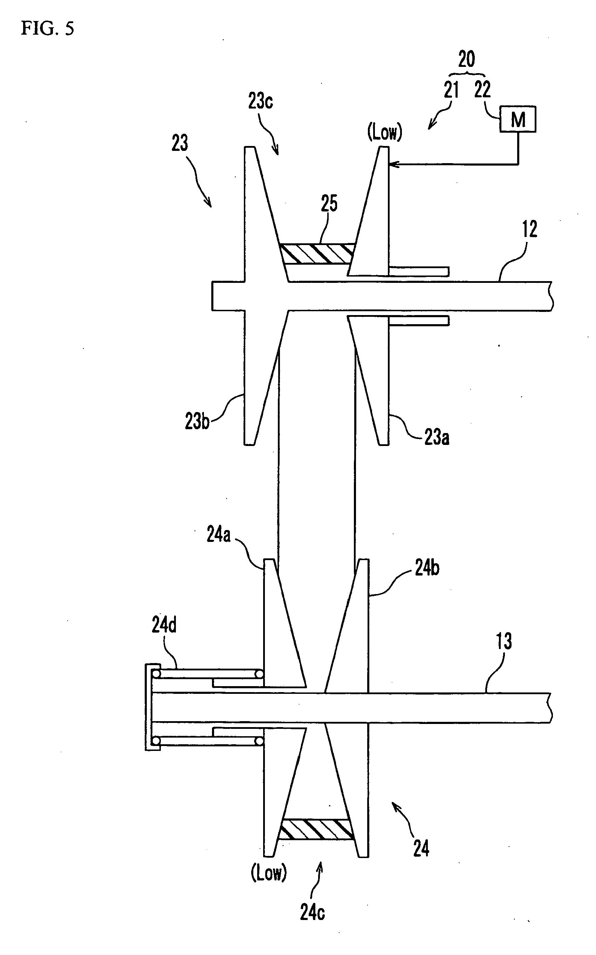

On the other hand, as shown in FIG. 5, if the motor 22 slides the moveable sheave 23a of the primary sheave 23 away from the fixed sheave 23b, the belt groove 23c of the primary sheave 23 widens, and the winding radius of the belt 25 at the primary sheave 23 side is reduced. Accompanying this action, along with the belt 25 in the belt groove 24c of the secondary sheave 24 moving radially outwards, the moveable sheave 24a of the secondary sheave 24 moves towards the fixed sheave 24b by the urging force of the spring 24d. This enlarges the winding radius of the belt 25 at the secondary sheave 24 side. In this way, the transmission ratio becomes larger, and the moveable sheaves 23a, 24a move closer to a Low position at which the transmission ratio is at a maximum.

Furthermore, as shown in FIG. 3, the output shaft 13 is connected to the speed reduction mechanism 31 via the centrifugal clutch 30. Moreover, the speed reduction mechanism 31 is connected to the rear wheel 3 via the force transmission mechanism 6 such as belt, chain and drive shaft. This positions the centrifugal clutch 30 between the output shaft 13 of the gear change mechanism 21 and the rear wheel 3 that is a driving wheel.

The centrifugal clutch 30 is engaged and disengaged according to the rotation speed of the secondary sheave 24. Specifically, if the rotation speed of the secondary sheave 24 has not reached a stipulated rotation speed, the centrifugal clutch 30 is disengaged. Thus, rotation of the secondary sheave 24 is not transmitted to the rear wheel 3. On the other hand, if the rotation speed of the secondary sheave 24 is at or above the stipulated rotation speed, the centrifugal clutch 30 is engaged. Thus, rotation of the secondary sheave 24 is transmitted to the rear wheel 3 via that centrifugal clutch 30, the speed reduction mechanism 31, and the force transmission mechanism 6. This causes the rear wheel 3 to rotate.

Hereinafter, a control system of the motorcycle 1 will be described with reference to FIG. 3. As shown in FIG. 3, control of the motorcycle 1 is mainly performed by the ECU (electronic control unit) 5 acting as a control device. The ECU 5 includes a memory 57 that saves a pre-set transmission ratio and various settings, a control portion 55, and a drive circuit 56 that drives the motor 22. The control portion 55 performs the sheave position control (a normal control of the transmission ratio of the invention) that slides the moveable sheave 23a of the primary sheave 23 in order to vary the transmission ratio.

Various sensors and switches are connected to the ECU 5. Specifically, a throttle opening sensor 33, the brake lever 4c, an engine rotation speed sensor 11, a sheave position sensor 26, a primary sheave rotation speed sensor 27, a secondary sheave rotation speed sensor 28, and a vehicle sensor 32 are connected to the ECU 5.

The throttle opening sensor 33 detects the throttle opening degree of the motorcycle 1. The throttle opening sensor 33 is connected to the throttle 70. The throttle opening sensor 33 outputs the detected throttle opening degree to the ECU 5 as a throttle opening degree signal 101. When the brake lever 4c is being operated by the rider, the brake signal 102 is output to the ECU 5. In other words, the brake lever 4c continues to output the brake signal 102 starting from when the brake lever 4c is operated by the rider to when the rider stops operating the brake lever 4c.

The engine rotation speed sensor 11 detects the rotation speed of the engine 10. The engine rotation speed sensor 11 outputs the detected rotation speed of the engine 10 to the ECU 5 as an engine rotation speed signal 103.

The sheave position sensor 26 is a sensor for detecting the transmission ratio of the gear change mechanism 21. Specifically, the sheave position sensor 26 detects the width of the belt groove 23c of the primary sheave 23 (see FIG. 4, FIG. 5). For example, when the primary sheave 23 includes the fixed sheave 23b and the moveable sheave 23a that can change position relative to the fixed sheave 23b as in this embodiment, a sheave position sensor 26 detects the position of the moveable sheave body in relation to the fixed sheave 23b. Moreover, the sheave position sensor 26 outputs the position of the moveable sheave 23a to the ECU 5 as a sheave position signal 104.

The primary sheave rotation speed sensor 27 detects the rotation speed of the primary sheave 23. The primary sheave rotation speed sensor 27 outputs the detected rotation speed of the primary sheave 23 to the ECU 5 as a primary sheave rotation speed signal 105.

The secondary sheave rotation speed sensor 28 detects the rotation speed of the secondary sheave 24. The secondary sheave rotation speed sensor 28 outputs the detected rotation speed of the secondary sheave 24 to the ECU 5 as a secondary sheave rotation speed signal 106.

The vehicle speed sensor 32 detects the vehicle speed of the motorcycle 1. The vehicle speed sensor 32 outputs the detected vehicle speed to the ECU 5 as a vehicle speed signal 107. Note that the vehicle speed sensor 32 may be a device that detects the rotation speed of the rear wheel 3; for example, the vehicle speed sensor 32 may acquire the vehicle speed by detecting the rotation speed of the output shaft of the speed reduction mechanism 31. Additionally, the vehicle speed sensor 32 may acquire the vehicle speed by detecting the rotation speed of the front wheel.

The ECU 5 performs control of the engine 10. Specifically, the ECU 5 calculates a target engine rotation speed based on the throttle opening signal 101 and the vehicle speed signal 107 among others. The ECU 5, while monitoring the engine rotation speed signal 103, controls the rotation speed, etc. of the engine 10 so that it is at the calculated target engine rotation speed. This is done through adjusting an ignition period of an ignition device (not shown) of the engine 10 and a fuel supply amount supplied to the engine 10.

Additionally, the ECU 5 performs control of the transmission 20. Specifically, when the power is turned ON and starting occurs, the ECU 5 first performs a starting control to confirm rotation of the belt 25. Moreover, once the rotation of the belt 25 is confirmed by the starting control, the sheave position control (the normal control of the transmission ratio of the invention) is initiated to vary the speed change ratio.

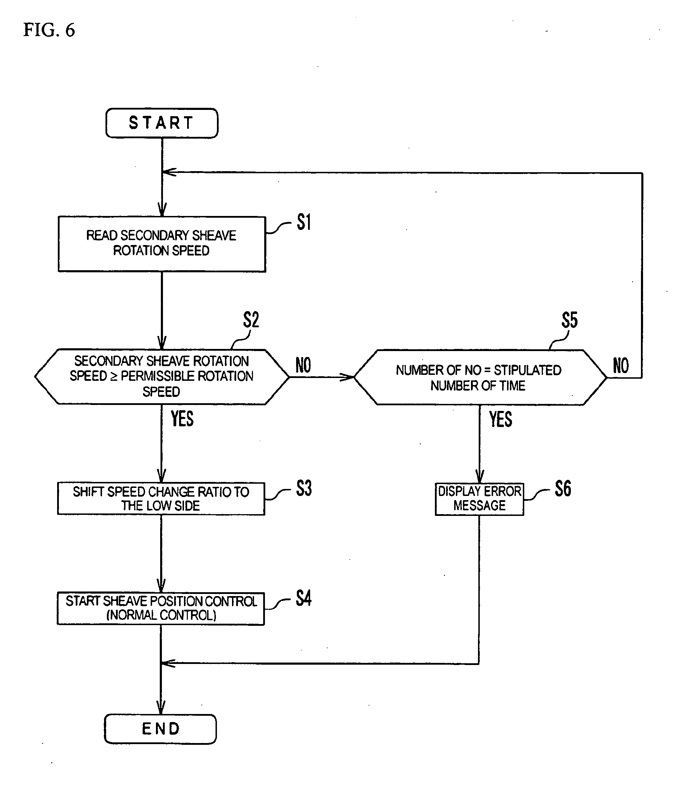

In the starting control, when detection of the rotation of the belt 25 of the gear change mechanism 21 is performed and rotation of the belt 25 is detected, the sheave position control is activated or initiated. Note that, in this embodiment of the invention, a belt rotation detection sensor of the invention is the secondary sheave rotation speed sensor 28 that detects the rotation speed of the secondary sheave 24. Thus, the control portion 55 of the ECU 5 determines whether the belt 25 is rotating from the rotation speed of the secondary sheave 24 detected by the secondary sheave rotation speed sensor 28. If it is determined that the belt 25 is rotating, the sheave position control is activated. Below, the operation of the starting control is described in detail with reference to FIG. 6.

First, as shown in FIG. 6, the rotation speed of the secondary sheave 24 detected by the secondary sheave rotation speed sensor 28 is read by the ECU 5 as the secondary sheave rotation speed signal (the secondary sheave rotation speed signal in FIG. 3) 106 (step S1).

When the secondary sheave rotation speed signal 106 is read, the ECU 5 determines whether or not the rotation speed of the secondary sheave 24 is at or above a stipulated permissible rotation speed (step S2). If the determination by the ECU 5 is YES in step S2, in other words, if it is determined that the rotation speed of the secondary sheave 24 is at or above a stipulated permissible rotation speed, the routine proceeds to step S3.

In step S3, the control portion 55 of the ECU 5 controls the motor 22 until the transmission ratio shifts to the Low side. As a result, the moveable sheave 23a of the primary sheave 23 moves toward the Low position. Moreover, when it is detected that the moveable sheave 23a of the primary sheave 23 has moved to the Low position based on the sheave position signal 104 input from the sheave position sensor 26, the routine proceeds to step S4.

In step S4, the control portion 55 starts the sheave position control (in other words, the normal control of the transmission ratio). Moreover, the starting control is terminated.

On the other hand, if the determination in step S2 is NO, in other words, if it is determined that the rotation speed of the secondary sheave 24 has not reached the stipulated permissible rotation speed, the routine proceeds to step S5.

First, in step S5, it is determined whether or not the cumulative number of NO determinations in step S2 has reached a stipulated number of times. Moreover, if the determination in step S5 is YES, in other words, if it is determined that the number of NO determinations in step S2 has reached the stipulated number of times, the routine proceeds to step S6.

In step S6, display of an error message is performed. The purpose of this error message display is to inform the rider that the primary sheave 23 continues to rotate idly without the belt 25. In this embodiment, as shown in FIG. 2, there is an error warning light 7a on the display panel 7, and the control portion 55 transmits an error message signal 109 to the error warning light 7a to illuminate the error warning light 7a. Thus, the error message display is performed. Moreover, the starting control is terminated.

If the determination in step S5 is NO, in other words, if it is determined that the cumulative number of NO determinations in step S2 has not reached the stipulated number of times, step S1 is returned to and each step is repeated. Note that, the cumulative number of NO determinations in step S2 is counted by a counter that is not shown in the figures. Furthermore, when step S1 is returned to from step S5, the cumulative number counted by the counter increases by one. Note that the counter is reset when the starting control ends.

When rotation of the belt 25 is confirmed by the starting control, the ECU 5 performs the sheave position control that varies the transmission ratio of the transmission 20. The ECU 5, based on a transmission ratio map that has been saved beforehand in the memory 57, controls the sheave position through driving the motor 22.

Specifically, the memory 57 within the ECU 5 stores a driving state of the motorcycle 1 such as the vehicle speed of the motorcycle 1, the engine rotation speed and the throttle opening degree, etc., as well as the transmission ratio map which stipulates the relationship with the transmission ratio. The control portion 55 shown in FIG. 3 calculates the target transmission ratio based on this transmission ratio map as well as the vehicle speed signal 107 and the engine rotation speed signal 103. The control portion 55 outputs a PWM signal 108 that is based on the calculated target transmission ratio, the sheave position signal 104, and the secondary sheave rotation speed signal 106 to the drive circuit 56. The drive circuit 56 applies a pulse voltage in accordance with the PWM signal 108 to the motor 22. This drives the motor 22 and adjusts the belt groove width of the primary sheave 23. As a result, the transmission ratio of the transmission 20 is changed until it is at the target transmission ratio.

Note that, in this embodiment, an example is described in which the actuator which varies the transmission ratio of the gear change mechanism 21 is the motor 22 which is controlled by PWM. However, in the invention, there is no particular limitation on what type of actuator is used to vary the transmission ratio of the transmission 20. For example, the actuator that varies the transmission ratio of the transmission 20 may be a motor that is controlled by PAM (pulse amplitude modulation). Alternatively, the actuator that varies the transmission ratio of the transmission 20 may be a step motor. Alternatively, the actuator that varies the transmission ratio of the transmission 20 may be a hydraulic actuator, etc.

As shown above, according to the control device (the ECU 5) of the transmission 20 of this embodiment, the sheave position control (the normal control) is performed after rotation of the belt 25 is detected. Thus, while the primary sheave 23 is rotating idly without the belt 25, the sheave position control is not performed. As a result, it is possible to inhibit inappropriate contact between the primary sheave 23 and the belt 25 from occurring during acceleration due to the sheave position control being started when the primary sheave 23 is rotating idly. Thus, through the control device (the ECU 5) of this transmission 20, accurate transmission ratio control can be realized, and control problems related to the ECVT can be inhibited in advance.

Additionally, in this embodiment, in the control device (the ECU 5) of the transmission 20, the secondary sheave rotation speed signal 106 is input by the secondary sheave rotation speed sensor 28, and the control device (the ECU 5) detects the rotation of the belt 25 from the rotation speed of the secondary sheave 24. Thus, according to this embodiment, the comparatively less expensive secondary sheave rotation speed sensor 28 can be used as the belt rotation detection sensor of the invention.

Meanwhile, when sheave position control in accordance with engine speed is initiated in a conventional ECVT control device, the idle rotation of the primary sheave 23 without the belt 25 cannot be detected and it is possible that the sheave position control may start despite the fact that the primary sheave 23 is rotating idly. To solve this problem, it might be possible to detect idle rotation of the primary sheave 23 through detecting the vehicle speed as well as the engine speed. Specifically, if the vehicle speed is zero despite the fact that the engine speed has surpassed the stipulated engine speed, it can be determined that the primary sheave 23 is idly rotating. Moreover, it is possible to inhibit the sheave position control from starting by detecting idle rotation of the primary sheave 23 in this way.

However, in the transmission 20 of this embodiment, the centrifugal clutch 30 is placed between the output shaft 13 and the rear wheel 3 that is the driving wheel. In this kind of transmission 20 in which the vehicle speed is detected in addition to the engine speed, the centrifugal clutch 30 is disengaged if the rotation speed of the secondary sheave 24 is lower than the stipulated rotation speed even if the belt 25 is rotating. This prevents force from the engine 10 from being transmitted to the driving wheel (the rear wheel 3). Thus, even if the belt 25 is rotating, it is possible in some situations that the sheave position control will not be activated because the vehicle speed is zero. As a result, the sheave position control will not be activated if the rotation speed of the secondary sheave 24 is not at or above the stipulated rotation speed. This is problematic because a significant amount of time is required before the sheave position control is activated.

With the control device (the ECU 5) of the transmission 20 of this embodiment of the invention, however, rotation of the belt 25 is detected and the sheave position control is activated when the belt 25 rotates. Thus, despite the fact that the primary sheave 23 is rotating idly, the sheave position control can be inhibited from starting or activating. Thus, accurate control of the transmission ratio by the transmission 20 can be realized and control problems related to the ECVT can be inhibited in advance.

Meanwhile, if the power is turned OFF just after sudden braking, the moveable sheave 23a of the primary sheave 23 will stop without returning all the way to the Low position. In cases such as this, if the power is turned ON again, the width of the belt groove 23c enlarges because the moveable sheave 23a of the primary sheave 23 automatically returns to the Low position. If this happens, the belt 25 will become slack and the primary sheave 23 will rotate idly due to only the belt groove 23c of the primary sheave 23 becoming enlarged.

In this embodiment, the belt 25 is a rubber belt. Furthermore, a rubber belt is more likely to become slack if tension is eliminated in comparison with a belt made from metal. Thus, as previously mentioned, if the power is turned OFF just after sudden braking and the moveable sheave 23a of the primary sheave 23 stops without returning all the way to the Low position, the chance of idle rotation occurring with the primary sheave 23 is higher in the transmission 20 that uses a rubber belt than a transmission that uses a metal belt. However, the sheave position control (the normal control) is performed only after rotation of the belt 25 is detected by the control device (the ECU 5) of the transmission 20. Thus, while the primary sheave 23 is rotating idly in relation to the belt 25, the sheave position control (the normal control) is not performed. Therefore, using the control device of the invention to control the transmission 20 that uses the rubber belt as in this embodiment is especially effective and allows the above-described effect to be improved still further.

Additionally, when the belt 25 is not rotating, the control portion 55 of the control device (the ECU 5) of the transmission 20 repeatedly performs determination of whether the belt 25 is rotating up to the stipulated number of times. Moreover, when the control portion 55 determines that the belt 25 has not rotated up to the stipulated number of times, it determines that the primary sheave 23 is continuously rotating idly and illuminates an error warning light 7a. Thus, the operator (the rider) is notified that the primary sheave 23 is continuously rotating idly by the control device (the ECU 5) of the transmission 20.

Furthermore, if the control portion 55 of the control device (the ECU 5) of the transmission 20 detects that the belt 25 is rotating, the sheave position control (the normal control) is activated and the motor 22 controlled so that the transmission ratio is shifted to the Low side (step S3, step S4 in FIG. 6). Thus, according to the control device (the ECU 5) of the transmission 20, the transmission ratio is definitely shifted to the Low side even if the primary sheave 23 stops without having returned to the Low position, which makes it possible for the transmission ratio to increase from the Low side. Thus, according to the control device (the ECU 5) of the transmission 20, smooth acceleration is possible when the power is turned ON even if the power had previously been turned OFF with the moveable sheave 23a of the primary sheave 23 not having returned to the Low position.

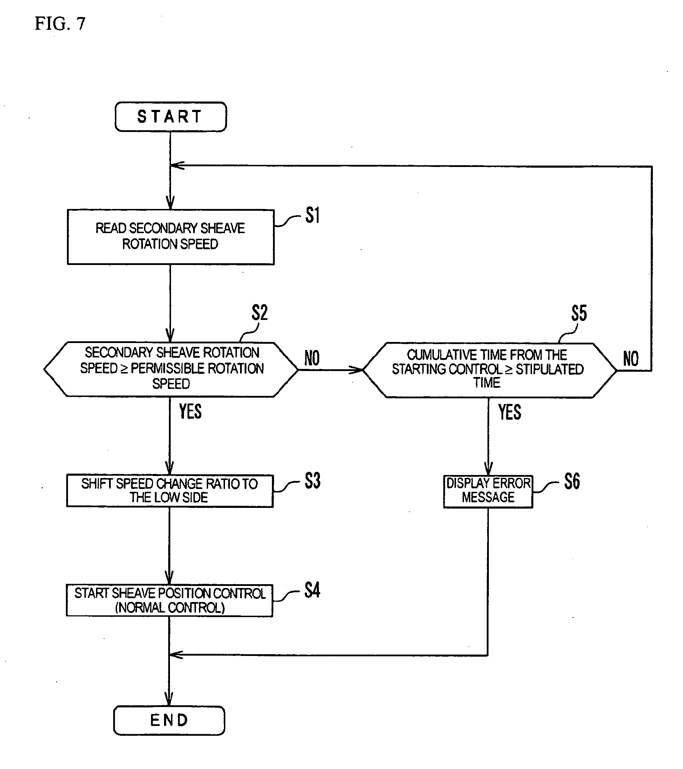

Note that, in the above-described embodiment, the control portion 55 determines that the primary sheave 23 is continuously rotating idly and an error message is displayed if the cumulative number of times that the control portion 55 has determined that the rotation speed of the secondary sheave 24 has not reached a stipulated permissible rotation speed reaches a stipulated number of times. In the control portion 55 of a first modified example, as shown in FIG. 7, if the cumulative time from the start of the starting control to the present time reaches or exceeds a stipulated time, it is determined that the primary sheave 23 is continuously rotating idly and an error message is displayed. Below, the starting control of the first modified example is described in detail. Note that, because steps S1 to S4 are the same as in the above-described embodiment, a description of them is omitted.

In the first modified example, at step S5 of the starting control, it is determined whether the cumulative time from the start of the starting control to the present time has reached or exceeded the stipulated time. Moreover, if the determination at step S5 is yes, in other words, if it is determined that the cumulative time from the start of the starting control to the present time has reached or exceeded the stipulated time, the routine proceeds to step S6. At step S6, the same error message as in the above-described embodiment is displayed. Moreover, the starting control is terminated.

On the other hand, if the determination at step S5 is NO, in other words, if it is determined that the cumulative time from the start of the starting control to the present time has not reached or exceeded the stipulated time, step S1 is returned to and each step is repeated. Note that, the cumulative time from the start of the starting control to the present time is counted by a counter that is not shown in the figures. Additionally, the counter is reset when starting control is terminated.

In this way, when the belt 25 is not rotating, the control portion 55 of the control device (the ECU 5) in the first modified example repeats determination of whether the belt 25 is rotating until the cumulative time from the start of the starting control to the present time reaches the stipulated time. Moreover, when the NO determination at step S2 (determination that the belt 25 is not rotating) has continued for a stipulated time or longer, the control portion 55 determines that the primary sheave 23 is continuously rotating idly and the error warning light 7a is illuminated. Through this action, the control device (ECU 5) of the first modified example can also notify the operator (the rider) of the fact that the primary sheave 23 is continuously rotating idly in the same way as in the above-described embodiment.

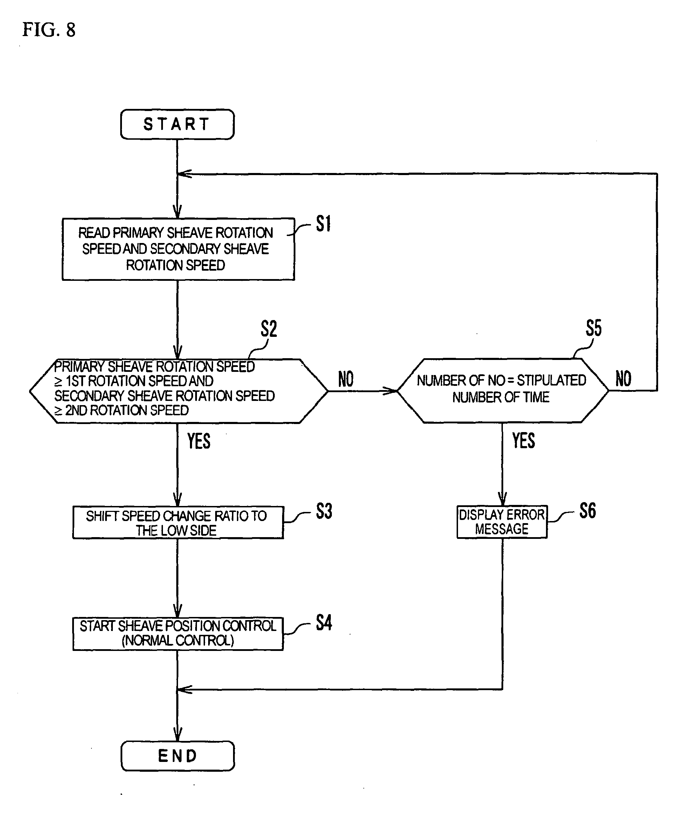

In the above-described example, in the starting control, the ECU 5 detects whether the belt 25 is rotating by determining whether the rotation speed of the secondary sheave 24 has reached or exceeded the stipulated permissible rotation speed. In a second modified example, the ECU 5 in the starting control detects rotation of the belt 25 not only based on the rotation speed of the secondary sheave 24, but also based on the rotation speed of the primary sheave 23. Below, starting control of the second modified example is described in detail with reference to FIG. 8. Note that, because steps S3 to S6 are the same as in the above-described embodiment, a description of them is omitted.

In the second modified example, at step S1 of the starting control, the rotation speed of the secondary sheave 24 detected by a secondary sheave rotation speed sensor 28 is read by the ECU 5 as a secondary sheave rotation speed signal 106 (a Secondary sheave rotation speed signal in FIG. 3). Furthermore, along with this, the rotation speed of the primary sheave 23 detected by the primary sheave rotation speed sensor 27 is also read by the ECU 5 as the primary sheave rotation speed signal 105 (the Primary sheave rotation speed signal in FIG. 3).

When the primary sheave rotation speed signal 105 and the secondary sheave rotation speed signal 106 are read, the control portion 55 of the ECU 5 determines whether or not the rotation speed of the primary sheave 23 has reached or exceeded a stipulated 1^{st} rotation speed and whether or not the rotation speed of the secondary sheave 24 has reached or exceeded a stipulated 2^{nd} rotation speed (step S2). Moreover, when the control portion 55 determines that the determination at step S2 is YES, the routine proceeds to step S3. On the other hand, when it is determined through the control portion 55 that the determination at step S2 is NO, the routine proceeds to step S5.

However, according the control device (the ECU 5) of the second modified example, whether the belt 25 is rotating is determined not only based on the rotation speed of the secondary sheave 24, but also based on the rotation speed of the primary sheave 23. Thus, according to the control device (the ECU 5) of the second modified example, rotation of the belt 25 can be more reliably detected. Therefore, according to the control device (ECU 5) of the second modified example, more accurate starting control is possible and problems related to ECVT control can be inhibited in advance.

Note that, the method for detecting rotation of the belt 25 based on the rotation speed of the primary sheave 23 and the rotation speed of the secondary sheave 24 is not necessarily limited to a method that uses the rotation speeds of the primary sheave 23 and secondary sheave 24 by themselves. Rotation of the belt 25 may be detected based on a number of variables including the rotation speed of the primary sheave 23 and the rotation speed of the secondary sheave 24. For example, rotation of the belt 25 may be detected by calculating the actual transmission ratio from the rotation speed of the primary sheave 23 and the rotation speed of the secondary sheave 24 and then comparing this actual transmission ratio with the pre-set transmission ratio.

The control device (the ECU 5) of a third modified example uses, instead of the secondary sheave rotation speed sensor 28, a gap sensor 61 as a belt rotation detection sensor that detects unevenness of the belt 25.

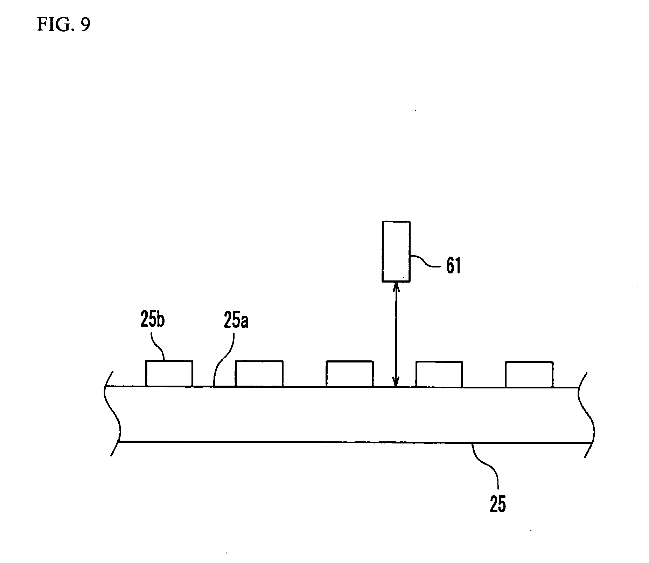

As shown in FIG. 9, the gap sensor 61 measures the distance from the gap sensor 61 to the belt 25 and detects whether the portion of the belt 25 facing the gap sensor 61 is a concave section 25a or a convex section 25b of the belt 25 based on the difference of this distance. Moreover, for example, the gap sensor 61 is positioned so that a detection signal is sent to the ECU 5 if the concave section 25a passes in front of the gap sensor 61. Thus, the ECU 5 can calculate the rotation speed of the belt 25 through measuring the number of times the detection signal has been sent from the gap sensor 61 within a specified amount of time.

In this way, if the gap sensor 61 is used as the belt rotation detection sensor, more direct detection of whether the belt 25 is rotating is possible. Thus, according to the control device (the ECU 5) of the third modified example, more accurate starting control is possible and problems related to ECVT control can be inhibited in advance.

The control device (the ECU 5) of a fourth modified example uses, instead of the secondary sheave rotation speed sensor 28, a sensor 62 as the belt rotation detection sensor that detects a striped pattern on the belt 25.

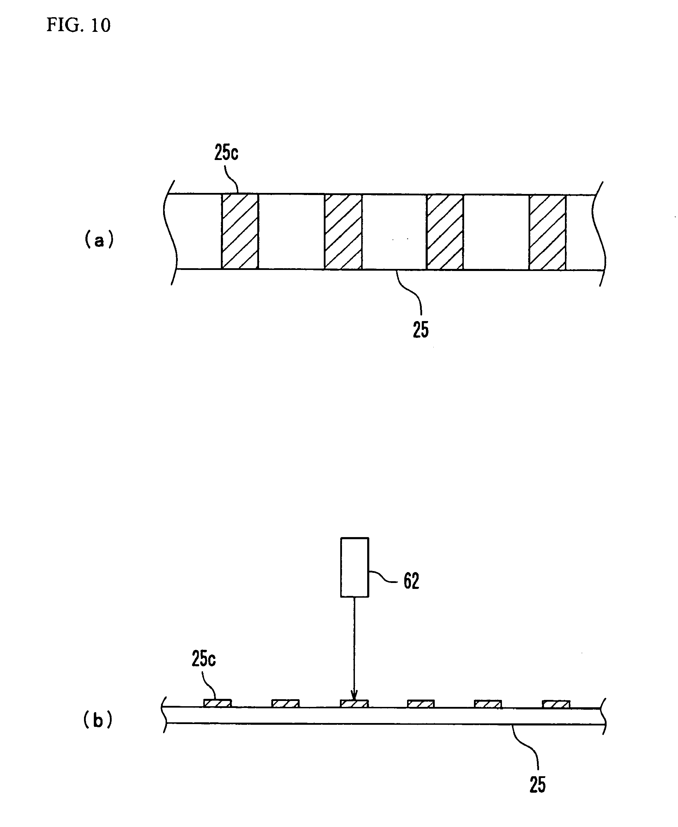

As shown in FIG. 10 (a), a pattern 25c that is detected optically or magnetically is placed in advance in a striped formation on the belt 25 of the fourth modified example. Moreover, an optical or magnetic sensor that can detect the pattern 25c detected optically or magnetically is used as the sensor 62. Furthermore, the sensor 62 is positioned so that a detection signal is sent to the ECU 5 from the sensor 62 if the striped formation pattern 25c passes in front of the sensor 62. Thus, the ECU 5 can calculate the rotation speed of the belt 25 by measuring the number of times the detection signal is sent from the sensor 62 within a stipulated amount of time.

In this way, if the optical sensor 62 or the magnetic sensor 62 is used as the belt rotation detection sensor, more direct detection of whether the belt 25 is rotating is possible. Thus, according to the control device (the ECU 5) of the fourth modified example, more accurate starting control is possible and problems related to ECVT control can be inhibited in advance.

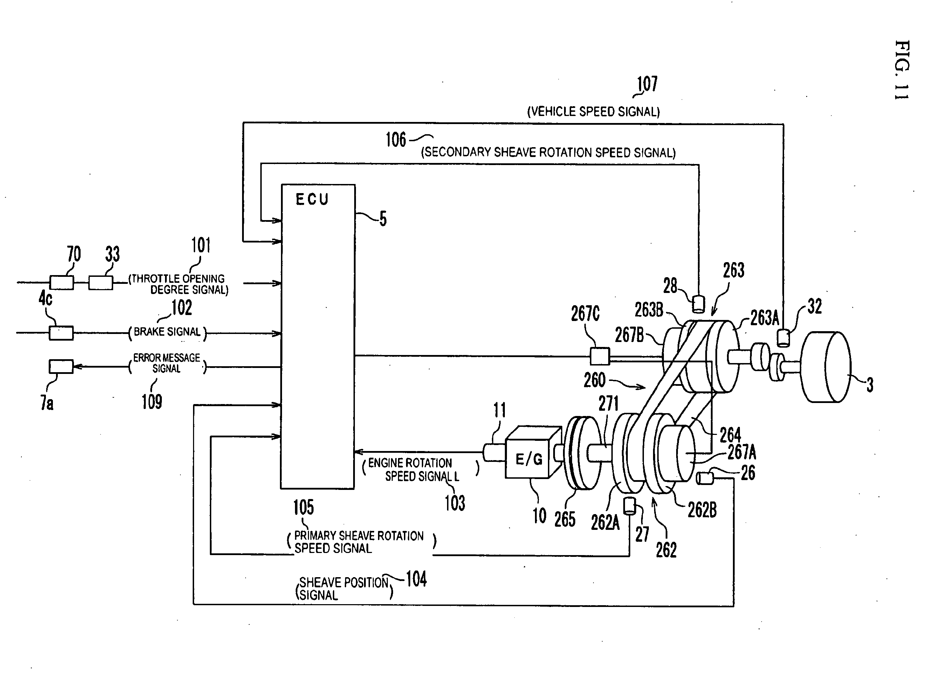

FIG. 11 is a block diagram showing a continuously variable transmission 260 and a control system of the motorcycle according to a second embodiment. According to the second embodiment also, the transmission 260 is a belt-type ECVT. However, the belt of a transmission 260 according to the second embodiment is a so-called metal belt 264.

According to the first embodiment, the actuator of the ECVT was the motor 22 (see FIG. 3) . However, the actuator of the ECVT is not necessarily limited to being the motor 22. According to the second embodiment explained hereinafter, the actuator of the ECVT is a hydraulic actuator.

Furthermore, as shown in FIG. 3, the clutch according to the first embodiment is the centrifugal clutch 30 positioned between the output shaft 13 and the rear wheel 3 of the transmission 20. In contrast to this, the clutch according to the second embodiment is a multi-plate friction clutch 265 that is positioned between the engine 10 and the input shaft 271 of the transmission 260.

In detail, as shown in FIG. 11, the motorcycle according to the second embodiment includes the multi-plate friction clutch 265 that is electronically-controlled and the transmission 260 that is the ECVT. The transmission 260 includes a primary sheave 262, a secondary sheave 263, and the metal belt 264 that is wound around the primary sheave 262 and the secondary sheave 263. The primary sheave 262 includes a fixed sheave body 262A and a moveable sheave body 262B. The primary sheave 263 includes a fixed sheave body 263A and a moveable sheave body 263B.

The primary sheave 262 has the primary sheave speed sensor 27. The secondary sheave 263 has the secondary sheave speed sensor 28.

The motorcycle includes, as the hydraulic actuator, a hydraulic cylinder 267A, a hydraulic cylinder 267B, and a hydraulic control valve 267C connected to the hydraulic cylinder 267A and the hydraulic cylinder 267B. The hydraulic cylinder 267A adjusts the groove width of the primary sheave 262 by driving the movable sheave body 262B of the primary sheave 262. The hydraulic cylinder 267B adjusts the groove width of the secondary sheave 263 by driving the movable sheave body 263B of the secondary sheave 263. The hydraulic control valve 267C is a valve that adjusts the hydraulic pressure fed to the hydraulic cylinders 267A and 267B. The hydraulic control valve 267C performs control such that, if the hydraulic pressure in either of the hydraulic cylinders 267A and 267B increases, the hydraulic pressure in the other cylinder will be reduced. The hydraulic control valve 267C is controlled by the ECU 5.

The multi-plate friction clutch 265 is positioned between the engine 10 and the input shaft 271 of the transmission 260, and, for example, continuous control is performed according to the rotation speed of the engine 10. For example, control is performed such that the multi-plate friction clutch 265 is engaged when the rotation speed of the engine 10 reaches a stipulated value, and, on the other hand, is disengaged if the rotation speed of the engine 10 does not reach the stipulated value.

The internal structure of the ECU 5 is substantially the same as in the first embodiment. In the second embodiment also, the same control as in the first embodiment is performed. In the second embodiment also, the same modified examples as each of the modified examples of the first embodiment can be applied.

In the second embodiment also, after starting, the ECU 5 performs the sheave position control (the normal control) after rotation of the belt 264 is detected. Thus, in the second embodiment also, the sheave position control is not performed while the primary sheave 264 is rotating idly in relation to the belt 264. Therefore, problems that occur during acceleration due to the sheave position control being activated with the primary sheave 23 rotating idly can be inhibited. Thus, in this embodiment also, accurate transmission ratio control is possible and control problems related to the ECVT can be inhibited in advance.

In the second embodiment also, the multi-plate friction clutch 265 that performs continuous control according to the rotation speed of the engine 10 is positioned between the engine 10 and the input shaft 271 of the transmission 260. According to this type of configuration, when shift control starts before rotation of the belt 264 is detected, in other words, before the clutch 265 is engaged, it is possible that acceleration will no longer be smooth. However, according to this embodiment, the sheave position control (the normal control) is performed after rotation of the belt 264 is detected, so even with the above-described configuration, smooth acceleration can always be performed.

Note that, with this embodiment, hydraulic pressure is constantly applied to the hydraulic cylinder 267A on the primary sheave 262 side and the hydraulic cylinder 267B on the secondary sheave 263 side. In this embodiment, the phrase "activation or start of actuator control after starting" refers to first varying the hydraulic pressure of at least one of either the hydraulic cylinder 267A or the hydraulic cylinder 267B after starting to drive the moveable sheave body 262B of the primary sheave 262 and the moveable sheave body 263B of the secondary sheave 263. Therefore, just applying constant hydraulic pressure to the hydraulic cylinder 267A and the hydraulic cylinder 267B is not included in the definition of the initiation or start of actuator control as referred to here.

Note that, in each of the above-described embodiments, the scooter motorcycle 1 is explained as one example of an embodiment of the invention. However, the vehicle of the invention is not limited to the above-described scooter motorcycle 1. The vehicle of the invention may be a vehicle other than the scooter motorcycle 1 such as another straddle-type vehicle or a side by side-type vehicle.

### Definitions of terms

"Drive source" refers to an object that generates force. The "drive source", for example, may be an internal combustion engine or an electric motor.

"Electronically-controlled transmission" refers to a general transmission that uses electricity to shift the transmission ratio. The "Electronically-controlled transmission" includes transmissions in which the transmission ratio is shifted by an electric motor and transmissions in which the transmission ratio is shifted by an electronically-controlled hydraulic actuator. In other words, as long as the control is electronic, there is no specific limitation on the type of actuator that varies the transmission ratio.

The present invention is useful for an electronically-controlled continuously variable transmission control device, a continuously variable transmission, and a vehicle equipped with the same.

### Description of the Reference Numerals and Signs

- 1: Motorcycle
- 2: Power unit
- 3: Rear wheel
- 5: ECU (Control device)
- 6: Force transmission mechanism
- 7a: Error warning light
- 10: Engine
- 12: Input shaft
- 13: Output shaft
- 20: Transmission (Continuously variable transmission)
- 21: Gear change mechanism
- 22: Motor
- 23: Primary sheave
- 23a: Moveable sheave (Primary moveable sheave body)
- 23b: Fixed sheave (Primary fixed sheave body)
- 23c: Belt groove
- 24: Secondary sheave
- 24a: Moveable sheave (Secondary moveable sheave body)
- 24b: Fixed sheave (Secondary fixed sheave body)
- 24c: Belt groove
- 24d: Spring
- 25: Belt
- 27: Primary sheave rotation speed sensor (Belt rotation detection sensor)
- 28: Secondary sheave rotation speed sensor (Belt rotation detection sensor)
- 30: Centrifugal clutch
- 31: Speed reduction mechanism
- 55: Control section
- 56: Drive circuit
- 57: Memory (Memory portion)
- 61: Gap sensor (Belt rotation detection sensor)
- 62: Sensor (Belt rotation detection sensor)
- 101: THROTTLE OPENING DEGREE SIGNAL
- 102: BRAKE SIGNAL
- 103: ENGINE ROTATION SPEED SIGNAL
- 104: SHEAVE POSITION SIGNAL
- 105: PRIMARY SHEAVE ROTATION SPEED SIGNAL PULSE VOLTAGE
- 106: SECONDARY SHEAVE ROTATION SPEED SIGNAL
- 107: VEHICLE SPEED SIGNAL
- 108: PWM SIGNAL
- 109: ERROR MESSAGE SIGNAL
- S1: READ SECONDARY SHEAVE ROTATION SPEED
- S2: SECONDARY SHEAVE ROTATION SPEED ≥ PERMISSIBLE ROTATION SPEED
- S3: SHIFT TRANSMISSION RATIO TO THE LOW SIDE
- S4: START SHEAVE POSITION CONTROL (NORMAL CONTROL)
- S5: NUMBER OF NO = STIPULATED NUMBER OF TIME
- S6: DISPLAY ERROR MESSAGE

## Claims

1. A control device (5) for an electronically-controlled continuously variable transmission (20), the transmission (20) being positioned between a drive source (10) and a driving wheel (3) of a vehicle (1) and being able to continuously vary a transmission ratio,
the continuously variable transmission (20) comprising:
a primary sheave (23) and a secondary sheave (24),
a belt wound (25) in a primary-side belt groove (23c) and a secondary-side belt groove (24c), and
an actuator (22) that varies a transmission ratio between the primary sheave (23) and secondary sheave (24) by varying at least one of a width of the primary-side belt groove (23c) and a width of the secondary-side belt groove (24c),
the control device (5) comprising:
an error warning light (7a),
a belt rotation detection sensor (28) for detecting rotation of the belt (25) directly or indirectly, and
a control portion (55) for controlling the actuator (22), wherein
the control portion (55) is adapted to determine whether or not the belt (25) is rotating based on a detection result from the belt rotation detection sensor and, when it is determined that the belt (25) is rotating, the control portion (55) is adapted to activate the actuator (22) after rotation of the belt (25) is detected and provide for normal control of the transmission ratio, and, on the other hand, when it is determined that the belt (25) is not rotating, the control portion (55) is adapted to repeatedly perform a determination step for a stipulated period of time or up to a stipulated number of times concerning whether or not the belt (25) is rotating, and when the determination step that the belt (25) has not rotated continues to be performed up to the stipulated amount of time or when determination that the belt (25) has not rotated is performed for the stipulated number of times, the control portion (55) is adapted to illuminate the error warning light (7a).

2. The control device according to claim 1, wherein
the belt rotation detection sensor (28) is adapted to detect rotation of the belt (25) by detecting a rotation speed of the secondary sheave (24).

3. The control device according to claim 1 or 2, wherein
the continuously variable transmission (20) further includes a centrifugal clutch (30) that is positioned between the output shaft (13) and the driving wheel (3).

4. The control device according to any preceding claim, wherein
the continuously variable transmission (20) further includes a clutch (265) positioned between the drive source (10) and the input shaft (271).

5. The control device according to any preceding claim, wherein
the belt (25) is a rubber belt.

6. The control device according to any preceding claim, comprising a memory portion (57) that stores a pre-set transmission ratio set, and
the control portion (55), by controlling the actuator (22), is adapted to provide for normal control of the transmission ratio to control the transmission ratio of the continuously variable transmission (20) to progress toward the pre-set transmission ratio, and
after the belt rotation detection sensor detects rotation of the belt (25), the control portion (55) is adapted to provide normal control of the transmission ratio after the actuator (22) has been controlled to shift the transmission ratio to the LOW side.

7. The control device according to any preceding claim, wherein
the belt rotation detection sensor includes
a primary-sheave rotation speed sensor (27) for detecting a rotation speed of the primary sheave (23),
a secondary-sheave rotation speed sensor (28) for detecting a rotation speed of the secondary sheave (24), and
the control portion (55) is adapted to detect rotation of the belt (25) based on the rotation speed of the primary sheave (23) and the rotation speed of the secondary sheave (24).

8. The control device according to claim 7, wherein
the control portion (55) is adapted to calculate an actual transmission ratio from the rotation speed of the primary sheave (23) detected by the primary-side rotation speed sensor (27) and the rotation speed of the secondary sheave (24) detected by the secondary-side rotation speed sensor (28), and is adapted to detect rotation of the belt (25) by comparing the pre-set transmission ratio set with the actual transmission ratio.

9. A combination of the control device (5) according to any of the preceding claims with a continuously variable transmission (20), the continuously variable transmission (20) comprising:
an input shaft (12),
an output shaft (13),
a primary sheave (23) that includes a primary fixed sheave body (23b) that rotates together with the input shaft (12) and a primary moveable sheave body (23a) that faces the primary fixed sheave body (23b) and that can change position with respect to the primary fixed sheave body (23b) in the axial direction of the input shaft (12), the primary moveable sheave body (23a) and the primary fixed sheave body (23b) together forming a primary-side belt groove (23c) that extends and widens in the radial direction, the primary moveable sheave body (23a) rotating along with the input shaft (12), and
a secondary sheave (24) that includes a secondary fixed sheave body (24b) that rotates together with the output shaft (13) and a secondary moveable sheave body (24a) that faces the secondary fixed sheave body (24b) and that can change position with respect to the secondary fixed sheave body (24b) in the axial direction of the output shaft (13), the secondary moveable sheave body (24a) and the secondary fixed sheave body (24b) together forming a secondary-side belt groove (24c) that extends and widens in the radial direction, the secondary moveable sheave body (24a) rotating along with the output shaft (13),

10. A vehicle comprising the control device (5) or combination of the control device and continuously variable transmission (20) according to any preceding claim.

11. A method of controlling an electronically-controlled continuously variable transmission (20), positioned between a drive source (10) and a driving wheel (3) of a vehicle (1), that can continuously vary a transmission ratio, the continuously variable transmission (20) comprising a primary sheave (23) and a secondary sheave (24), a belt wound (25) in a primary-side belt groove (23c) and a secondary-side belt groove (24c), and an actuator (22) that varies a transmission ratio between the primary sheave (23) and secondary sheave (24) by varying at least one of a width of the primary-side belt groove (23c) and a width of the secondary-side belt groove (24c), the method comprising:
detecting rotation of the belt (25) directly or indirectly, and
controlling the actuator (22) to vary the transmission ratio, wherein
following starting of the vehicle, determining whether or not the belt (25) is rotating based on a belt rotation detection result and, when it is determined that the belt (25) is rotating, activating the actuator (22) only after rotation of the belt (25) is detected and providing normal control of the transmission ratio, and, on the other hand, when it is determined that the belt (25) is not rotating, repeatedly performing a determination step for a stipulated period of time or up to a stipulated number of times concerning whether or not the belt (55) is rotating, and when the determination step that the belt (25) has not rotated continues to be performed up to the stipulated amount of time or when determination that the belt (25) has not rotated is performed for the stipulated number of times, illuminating an error warning light (7a).

## Patentansprüche

1. Steuerungsvorrichtung (5) für ein elektronisch gesteuertes stufenlos verstellbares Getriebe (20), wobei das Getriebe (20) zwischen einer Antriebsquelle (10) und einem Antriebsrad (3) eines Fahrzeugs (1) angeordnet ist und imstande ist, ein Übersetzungsverhältnis stufenlos zu verstellen,
das stufenlos verstellbare Getriebe (20) umfassend:
eine primäre Rillenscheibe (23) und eine sekundäre Rillenscheibe (24),
einen Riemen (25), der in einer primärseitigen Riemenrille (23c) und einer sekundärseitigen Riemenrille (24c) gewunden ist, und
ein Betätigungsglied (22), das ein Übersetzungsverhältnis zwischen der primären Rillenscheibe (23) und der sekundären Rillenscheibe (24) durch Verändern von mindestens einer einer Breite der primärseitigen Riemenrille (23c) und einer Breite der sekundärseitigen Riemenrille (24c) verändert,
die Steuerungsvorrichtung (5) umfassend:
eine Fehlerwarnleuchte (7a),
einen Riemendrehungs-Detektionssensor (28) zum direkten oder indirekten Detektieren der Drehung des Riemens (25), und
einen Steuerungsabschnitt (55) zum Steuern des Betätigungsglieds (22), wobei der Steuerungsabschnitt (55) angepasst ist, um basierend auf einem Detektionsergebnis von dem Riemendrehungs-Detektionssensor zu bestimmen, ob der Riemen (25) sich dreht oder nicht, und wenn bestimmt wird, dass der Riemen (25) sich dreht, der Steuerungsabschnitt (55) angepasst ist, um das Betätigungsglied (22) zu aktivieren, nachdem Drehung des Riemens (25) detektiert wird, und normale Steuerung des Übersetzungsverhältnisses bereitzustellen, und wenn dagegen bestimmt wird, dass der Riemen (25) sich nicht dreht, der Steuerungsabschnitt (55) angepasst ist, um wiederholt einen Bestimmungsschritt für eine festgesetzte Zeitperiode oder bis zu einer festgesetzten Häufigkeit dahingehend durchzuführen, ob sich der Riemen (25) dreht oder nicht, und wenn der Bestimmungsschritt, dass sich der Riemen (25) nicht gedreht hat, fortgesetzt bis zu der festgesetzten Zeitdauer durchgeführt wird, oder wenn die Bestimmung, dass der Riemen (25) sich nicht gedreht hat, für die festgesetzte Häufigkeit durchgeführt wird, der Steuerungsabschnitt (55) angepasst ist, um die Fehlerwarnleuchte (7a) zu beleuchten.

2. Steuerungsvorrichtung nach Anspruch 1, wobei
der Riemendrehungs-Detektionssensor (28) angepasst ist, um Drehung des Riemens (25) durch Detektieren einer Drehzahl der sekundären Rillenscheibe (24) zu detektieren.

3. Steuerungsvorrichtung nach Anspruch 1 oder 2, wobei
das stufenlos verstellbare Getriebe (20) weiterhin eine Zentrifugalkupplung (30) enthält, die zwischen der Ausgangswelle (13) und dem Antriebsrad (3) angeordnet ist.

4. Steuerungsvorrichtung nach einem der vorstehenden Ansprüche, wobei
das stufenlos verstellbare Getriebe (20) weiterhin eine Kupplung (265) enthält, die zwischen der Antriebsquelle (10) und der Eingangswelle (271) angeordnet ist.

5. Steuerungsvorrichtung nach einem der vorstehenden Ansprüche, wobei der Riemen (25) ein Gummiriemen ist.

6. Steuerungsvorrichtung nach einem der vorstehenden Ansprüche, umfassend
einen Speicherabschnitt (57), der einen Satz voreingestellter Übersetzungsverhältnisse speichert, und
wobei der Steuerungsabschnitt (55) durch Steuern des Betätigungsglieds (22) angepasst ist, um normale Steuerung des Übersetzungsverhältnisses bereitzustellen, um das Übersetzungsverhältnis des stufenlos verstellbaren Getriebes (20) zu steuern, um hin zu dem voreingestellten Übersetzungsverhältnis vorzurücken, und,
nachdem der Riemendrehungs-Detektionssensor Drehung des Riemens (25) detektiert, der Steuerungsabschnitt (55) angepasst ist, um normale Steuerung des Übersetzungsverhältnisses bereitzustellen, nachdem das Betätigungsglied (22) gesteuert wurde, um das Übersetzungsverhältnis zu der LOW-Seite zu verlagern.

7. Steuerungsvorrichtung nach einem der vorstehenden Ansprüche, wobei der Riemendrehungs-Detektionssensor enthält
einen Primärrillenscheiben-Drehzahlsensor (27) zum Detektieren einer Drehzahl der primären Rillenscheibe (23),
einen Sekundärrillenscheiben-Drehzahlsensor (28) zum Detektieren einer Drehzahl der sekundären Rillenscheibe (24), und
der Steuerungsabschnitt (55) angepasst ist, um Drehung des Riemens (25) basierend auf der Drehzahl der primären Rillenscheibe (23) und der Drehzahl der sekundären Rillenscheibe (24) zu detektieren.

8. Steuerungsvorrichtung nach Anspruch 7, wobei
der Steuerungsabschnitt (55) angepasst ist, um ein tatsächliches Übersetzungsverhältnis aus der Drehzahl der primären Rillenscheibe (23), die durch den primärseitigen Drehzahlsensor (27) detektiert wurde, und der Drehzahl der sekundären Rillenscheibe (24), die durch den sekundärseitigen Drehzahlsensor (28) detektiert wurde, zu berechnen, und angepasst ist, um Drehung des Riemens (25) durch Vergleichen des Satzes voreingestellter Übersetzungsverhältnisse mit dem tatsächlichen Übersetzungsverhältnis zu detektieren.

9. Kombination der Steuerungsvorrichtung (5) nach einem der vorstehenden Ansprüche mit einem stufenlos verstellbaren Getriebe (20), das stufenlos verstellbare Getriebe (20) umfassend:
eine Eingangswelle (12),
eine Ausgangswelle (13),
eine primäre Rillenscheibe (23), die einen primären festen Rillenscheibenkörper (23b) enthält, der sich zusammen mit der Eingangswelle (12) dreht, und einen primären beweglichen Rillenscheibenkörper (23a), der zu dem primären festen Rillenscheibenkörper (23b) weist und der seine Position in Bezug auf den primären festen Rillenscheibenkörper (23b) in einer Axialrichtung der Eingangswelle (12) ändern kann, wobei der primäre bewegliche Rillenscheibenkörper (23a) und der primäre feste Rillenscheibenkörper (23b) zusammen eine primärseitige Riemenrille (23c) bilden, die sich in der Radialrichtung erstreckt und verbreitert, wobei sich der primäre bewegliche Rillenscheibenkörper (23a) zusammen mit der Eingangswelle (12) dreht, und
eine sekundäre Rillenscheibe (24), die einen sekundären festen Rillenscheibenkörper (24b) enthält, der sich zusammen mit der Ausgangswelle (13) dreht, und einen sekundären beweglichen Rillenscheibenkörper (24a), der zu dem sekundären festen Rillenscheibenkörper (24b) weist und der seine Position in Bezug auf den sekundären festen Rillenscheibenkörper (24b) in der Axialrichtung der Ausgangswelle (13) ändern kann, wobei der sekundäre bewegliche Rillenscheibenkörper (24a) und der sekundäre feste Rillenscheibenkörper (24b) zusammen eine sekundärseitige Riemenrille (24c) bilden, die sich in der Radialrichtung erstreckt und verbreitert, wobei sich der sekundäre bewegliche Rillenscheibenkörper (24a) zusammen mit der Ausgangswelle (13) dreht.

10. Fahrzeug, umfassend die Steuerungsvorrichtung (5) oder eine Kombination der Steuerungsvorrichtung und des stufenlos verstellbaren Getriebes (20) nach einem der vorstehenden Ansprüche.

11. Verfahren zum Steuern eines elektronisch gesteuerten stufenlos verstellbaren Getriebes (20), das zwischen einer Antriebsquelle (10) und einem Antriebsrad (3) eines Fahrzeugs (1) angeordnet ist und das ein Übersetzungsverhältnis stufenlos verstellen kann, das stufenlos verstellbare Getriebe (20) umfassend eine primäre Rillenscheibe (23) und eine sekundäre Rillenscheibe (24), einen Riemen (25), der in einer primärseitigen Riemenrille (23c) und einer sekundärseitigen Riemenrille (24c) gewunden ist, und ein Betätigungsglied (22), das ein Übersetzungsverhältnis zwischen der primären Rillenscheibe (23) und der sekundären Rillenscheibe (24) durch Verändern von mindestens einer einer Breite der primärseitigen Riemenrille (23c) und einer Breite der sekundärseitigen Riemenrille (24c) verändert, das Verfahren umfassend:
Detektieren der Drehung des Riemens (25) direkt oder indirekt, und
Steuern des Betätigungsglieds (22) zum Verändern des Übersetzungsverhältnisses, wobei
Bestimmen, nach dem Starten des Fahrzeugs, basierend auf einem Riemendrehungs-Detektionsergebnis, ob der Riemen (25) sich dreht oder nicht, und wenn bestimmt wird, dass der Riemen (25) sich dreht, Aktivieren des Betätigungsglieds (22), nur nachdem Drehung des Riemens (25) detektiert wird, und Bereitstellen normaler Steuerung des Übersetzungsverhältnisses, und wenn dagegen bestimmt wird, dass der Riemen (25) sich nicht dreht, wiederholtes Durchführen eines Bestimmungsschritts für eine festgesetzte Zeitperiode oder bis zu einer festgesetzten Häufigkeit dahingehend, ob sich der Riemen (55) dreht oder nicht, und wenn der Bestimmungsschritt, dass sich der Riemen (25) nicht gedreht hat, fortgesetzt bis zu der festgesetzten Zeitdauer durchgeführt wird, oder wenn die Bestimmung, dass der Riemen (25) sich nicht gedreht hat, für die festgesetzte Häufigkeit durchgeführt wird, Beleuchten einer Fehlerwarnleuchte (7a).

## Revendications

1. Dispositif de commande (5) pour une transmission à variation continue à commande électronique (20), la transmission (20) étant positionnée entre une source d'entraînement (10) et une roue motrice (3) d'un véhicule (1) étant capable de faire varier en continu un rapport de transmission,
la transmission à variation continue (20) comprenant :
une poulie primaire (23) et une poulie secondaire (24),
une courroie enroulée (25) dans une gorge de courroie côté primaire (23c) et une gorge de courroie côté secondaire (24c), et
un actionneur (22) qui fait varier un rapport de transmission entre la poulie primaire (23) et la poulie secondaire (24) en faisant varier au moins l'un parmi la largeur de la gorge de courroie côté primaire (23c) et la largeur de la gorge de courroie côté secondaire (24c),
le dispositif de commande (5) comprenant
un voyant lumineux d'avertissement d'erreur (7a),
un capteur de détection de rotation de courroie (28) pour détecter la rotation de la courroie (25) directement ou indirectement, et
une partie de commande (55) pour commander l'actionneur (22), où
la partie de commande (55) est adaptée pour déterminer si la courroie (25) tourne ou non sur la base d'un résultat de détection provenant du capteur de détection de rotation de courroie et, lorsqu'il est déterminé que la courroie (25) tourne, la partie de commande (55) est adaptée pour activer l'actionneur (22) après que la rotation de la courroie (25) ait été détectée et produire une commande normale du rapport de transmission, et, d'autre part, lorsqu'il est déterminé que la courroie (25) ne tourne pas, la partie de commande (55) est adaptée pour effectuer de manière répétée une étape de détermination pendant une durée spécifiée ou jusqu'à un nombre de fois spécifié concernant le fait que la courroie (25) tourne ou non, et lorsque l'étape de détermination que la courroie (25) n'a pas tourné continue d'être effectuée jusqu'au nombre de fois spécifié ou lorsque la détermination que la courroie (25) n'a pas tourné est effectué le nombre de fois spécifié, la partie de commande (55) est adaptée pour éclairer le voyant lumineux d'avertissement d'erreur (7a).

2. Dispositif de commande selon la revendication 1, dans lequel
le capteur de détection de rotation de courroie (28) est adapté pour détecter la rotation de la courroie (25) en détectant la vitesse de rotation de la poulie secondaire (24).

3. Dispositif de commande selon la revendication 1 ou 2, dans lequel
la transmission à variation continue (20) comprend en outre un embrayage centrifuge (30) qui est positionné entre l'arbre de sortie (13) et la roue motrice (3).

4. Dispositif de commande selon l'une quelconque des revendications précédentes, dans lequel
la transmission à variation continue (20) comprend en outre un embrayage (265) positionné entre la source d'entraînement (10) et l'arbre d'entrée (271).

5. Dispositif de commande selon l'une quelconque des revendications précédentes, dans lequel
la courroie (25) est une courroie en caoutchouc.

6. Dispositif de commande selon l'une quelconque des revendications précédentes, comprenant
une partie de mémoire (57) qui stocke un rapport de transmission préréglé défini, et
la partie de commande (55), en commandant l'actionneur (22), est adaptée pour produire une commande normale du rapport de transmission pour réguler le rapport de transmission de la transmission à variation continue (20) afin de progresser vers le rapport de transmission préréglé, et
après que le capteur de détection de rotation de courroie ait détecté la rotation de la courroie (25), la partie de commande (55) est adaptée pour produire une commande normale du rapport de transmission après que l'actionneur (22) ait été commandé pour déplacer le rapport de transmission vers le côté FAIBLE.

7. Dispositif de commande selon l'une quelconque des revendications précédentes, dans lequel
le capteur de détection de rotation de courroie comprend
un capteur de vitesse de rotation de poulie primaire (27) pour détecter la vitesse de rotation de la poulie primaire (23),
un capteur de vitesse de rotation de poulie secondaire (28) pour détecter la vitesse de rotation de la poulie secondaire (24), et
la partie de commande (55) est adaptée pour détecter la rotation de la courroie (25) sur la base de la vitesse de rotation de la poulie primaire (23) et la vitesse de rotation de la poulie secondaire (24).

8. Dispositif de commande selon la revendication 7, dans lequel
la partie de commande (55) est adaptée pour calculer un rapport de transmission effectif à partir de la vitesse de rotation de la poulie primaire (23) détectée par le capteur de vitesse de rotation de poulie côté primaire (27) et de la vitesse de rotation de la poulie secondaire (24) détectée par le capteur de vitesse de rotation côté secondaire (28), et est adaptée pour détecter la rotation de la courroie (25) en comparant le rapport de transmission préréglé défini au rapport de transmission effectif.

9. Combinaison du dispositif de commande (5) selon l'une quelconque des revendications précédentes avec une transmission à variation continue (20), la transmission à variation continue (20) comprenant :
un arbre d'entrée (12),
un arbre de sortie (13),
une poulie primaire (23) qui comprend un corps de poulie fixe primaire (23b) qui tourne solidairement avec l'arbre d'entrée (12) et un corps de poulie mobile primaire (23a) qui fait face au corps de poulie fixe primaire (23b) et qui peut changer de position par rapport au corps de poulie fixe primaire (23b) dans la direction axiale de l'arbre d'entrée (12), le corps de poulie mobile primaire (23a) et le corps de poulie fixe primaire (23b) formant conjointement une gorge de courroie côté primaire (23c) qui s'étend et s'élargit dans la direction radiale, le corps de poulie mobile primaire (23a) tournant avec l'arbre d'entrée (12), et
une poulie secondaire (24) qui comprend un corps de poulie fixe secondaire (24b) qui tourne solidairement avec l'arbre de sortie (13) et un corps de poulie mobile secondaire (24a) qui fait face au corps de poulie fixe secondaire (24b) et qui peut changer de position par rapport au corps de poulie fixe secondaire (24b) dans la direction axiale de l'arbre de sortie (13), le corps de poulie mobile secondaire (24a) et le corps de poulie fixe secondaire (24b) formant conjointement une gorge de courroie côté secondaire (24c) qui s'étend et s'élargit dans la direction radiale, le corps de poulie mobile secondaire (24a) tournant avec l'arbre de sortie (13).

10. Véhicule comprenant le dispositif de commande (5) ou une combinaison du dispositif de commande et d'une transmission à variation continue (20) selon l'une quelconque des revendications précédentes.

11. Procédé de commande d'une transmission à variation continue à commande électronique (20), positionnée entre une source d'entraînement (10) et une roue motrice (3) d'un véhicule (1), qui peut faire varier en continu un rapport de transmission, la transmission à variation continue (20) comprenant une poulie primaire (23) et une poulie secondaire (24), une courroie enroulée (25) dans une gorge de courroie côté primaire (23c) et une gorge de courroie côté secondaire (24c), et un actionneur (22) qui fait varier un rapport de transmission entre la poulie primaire (23) et la poulie secondaire (24) en faisant varier au moins l'un parmi la largeur de la gorge de courroie côté primaire (23c) et la largeur de la gorge de courroie côté secondaire (24c), le procédé comprenant :
la détection de la rotation de la courroie (25) directement ou indirectement, et
la commande de l'actionneur (22) pour faire varier le rapport de transmission, où
après le démarrage du véhicule, la détermination si la courroie (25) tourne ou non sur la base d'un résultat de détection de rotation de courroie et, lorsqu'il est déterminé que la courroie (25) tourne, l'activation de l'actionneur (22) uniquement après que la rotation de la courroie (25) soit détectée et la production d'une commande normale du rapport de transmission, et, d'autre part, lorsqu'il est déterminé que la courroie (25) ne tourne pas, l'exécution répétée d'une étape de détermination pendant une durée spécifiée ou jusqu'à un nombre de fois spécifié concernant le fait que la courroie (55) tourne ou non, et lorsque l'étape de détermination que la courroie (25) n'a pas tourné continue d'être effectuée jusqu'au nombre de fois spécifié ou lorsque la détermination que la courroie (25) n'a pas tourné est effectué le nombre de fois spécifié, l'éclairage du voyant lumineux d'avertissement d'erreur (7a).
